# EUROPEAN PATENT APPLICATION

(11) **EP 4 678 571 A1**
(43) Date of publication of application: **14.01.2026**
(21) Application number: 23932122.7
(22) Date of filing: 07.07.2023
(51) Int. Cl.: B65G 47/86

(54) **ARTICLE CONVEYING DEVICE**

(30) Priority: 05.04.2023 JP 2023061110
(71) Applicant: Mitsubishi Heavy Industries Machinery Systems, Ltd., Kobe-shi, Hyogo 652-8585 (JP)
(72) Inventor: WATANABE, Atsunori, Kobe-shi, Hyogo 652-8585 (JP); YUI, Sugihiko, Kobe-shi, Hyogo 652-8585 (JP)
(74) Representative: Hoffmann Eitle
(86) International application number: PCT/JP2023/025245
(87) International publication number: WO 2024/209712

(57) **Abstract**

Provided is an article conveying device with which it is possible to suppress the generation of abrasion powder which results from the inversion of grippers. This conveyance device comprises: a rotary body that can be rotated by a drive source; a plurality of grippers that are supported by the rotary body, and that are configured so that the posture of each gripper can be inverted while gripping a container; and an inverting mechanism that inverts the posture of the grippers. The inverting mechanism inverts the posture of the grippers by applying magnetic repulsive force or magnetic attraction force to the grippers.

## Description

### Technical Field

The present disclosure relates to a conveying device for an article, which is appropriately used in, for example, a device called a rotary rinser that performs washing and draining of a container made of resin.

### Background Art

A system for filling a container with a beverage or the like includes a rotary rinser. The rotary rinser is a rotary container washing apparatus that performs treatment such as washing, draining, and drying while gripping a container with a plurality of grip tools called grippers, chucks, or the like provided at a peripheral edge of a rotary body. The rotary rinser grips a part of the conveyed container, for example, a neck portion, in an upright state with the gripper, and inverts the container together with the gripper to turn the container upside down. After inverting the container upside down, the rotary rinser inverts the container together with the gripper to the upright state, and conveys the container toward a downstream process. That is, the rotary rinser has a function as a conveying device.

As an inversion mechanism, PTL 1 is known. The inversion mechanism of PTL 1 includes a guide rail that is connected in a circumferential direction and has a fixed position, a U-shaped slider that moves while sliding on the guide rail, and a gripper that is integrated with the slider and performs an inversion operation. The guide rail is changed in a trajectory in the circumferential direction, and an orientation of the slider moving in the circumferential direction while sliding on the guide rail is inverted, so that the gripper is inverted.

### Citation List

### Patent Literature

[PTL 1] Japanese Unexamined Patent Application Publication No. H6-262154

### Summary of Invention

### Technical Problem

In the inversion mechanism in which the guide rail and the slider slide with each other as in PTL 1, the guide rail and the slider are inevitably worn due to the sliding. The rotary rinser provided with the inversion mechanism requires an element for preventing wear powder generated by wear from entering an inside of the container.

In addition, there is a possibility that the guide rail and the slider need to be replaced as wear progresses.

From the above, an object of the present disclosure is to provide a conveying device for an article capable of suppressing generation of wear powder due to inversion of a gripper.

### Solution to Problem

According to the present disclosure, there is provided a conveying device for an article including: a rotary body that is rotatable by a driving source; a plurality of grippers which are supported by the rotary body and each of which is configured to invert a posture while gripping the article; and an inversion mechanism that inverts the posture of the gripper. According to the present disclosure, in the conveying device for an article, the inversion mechanism inverts the posture of the gripper by applying a magnetic repulsive force or a magnetic attractive force to the gripper.

### Advantageous Effects of Invention

With the conveying device of the present disclosure, a posture of a gripper can be inverted by applying a magnetic repulsive force or a magnetic attractive force to the gripper. Since both the magnetic repulsive force and the magnetic attractive force can apply an external force required for inversion on the gripper in a non-contact manner, the conveying device of the present disclosure can suppress generation of wear powder as the posture of the gripper is inverted.

### Brief Description of Drawings

FIG. 1 is a perspective view illustrating a conveying device according to an embodiment.
FIG. 2 is a plan view illustrating the conveying device according to the embodiment.
FIG. 3 is a perspective view (PV) and a side view (SV) illustrating a gripper according to the embodiment.
FIG. 4 is a view illustrating an arrangement example of fixed-side magnets according to the embodiment.
FIG. 5 is a plan view illustrating an example of an inversion region A1 and an inversion region A2 according to the embodiment.
FIG. 6 is a plan view illustrating another example of the inversion region A1 and the inversion region A2 according to the embodiment.
FIG. 7 is a plan view illustrating still another example of the inversion region A1 and the inversion region A2 according to the embodiment.
FIG. 8 is a side view illustrating another example of the gripper according to the embodiment.

### Description of Embodiments

Hereinafter, embodiments will be described with reference to the accompanying drawings. With a conveying device to be described below, for example, a posture of a container to be cleaned, as an example of an article, in a rotary rinser is inverted from an upright posture to an inverted posture and inverted from the inverted posture to the upright posture while the container being conveyed along a conveying path having a circumference.

In the container in the embodiment, the upright posture means a posture with which an inlet portion such as a pouring port and a drinking port faces upward, and conversely, the inverted posture means a posture with which the inlet portion faces downward. A gripper itself that grips the container is not in an upright posture or an inverted posture only by the front and back being inverted. Meanwhile, in order to clarify the correspondence with the container, in the present disclosure, a posture of the gripper that grips the container in an upright posture will be referred to as an upright posture, and the posture of the gripper that grips the container in an inverted posture will be referred to as an inverted posture.

In addition, in the embodiment, an upstream side and a downstream side are determined according to a direction in which the container is conveyed. Meanwhile, the upstream side and the downstream side have relative meaning.

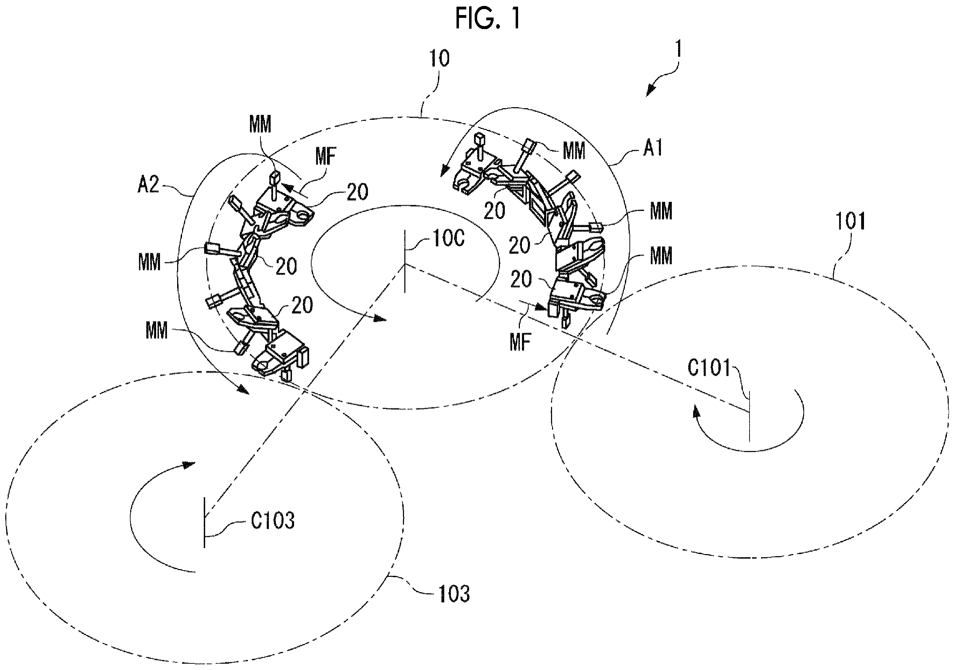

### [Embodiment: FIGS. 1, 2, 3, and 4]

In a conveying device 1 according to the embodiment, both a movable-side magnet MM and a fixed-side magnet FM are permanent magnets, and an inversion mechanism 30 is configured such that the movable-side magnet MM and the fixed-side magnet FM have the same magnetic poles facing each other. In addition, the movable-side magnet MM is fixed to an inversion arm 33 that is rotatable integrally with a gripper 20 that grips the container, in the conveying device 1. Further, in the conveying device 1, the movable-side magnet MM is provided in each of the grippers 20, and a plurality of fixed-side magnets FM are arranged in a row.

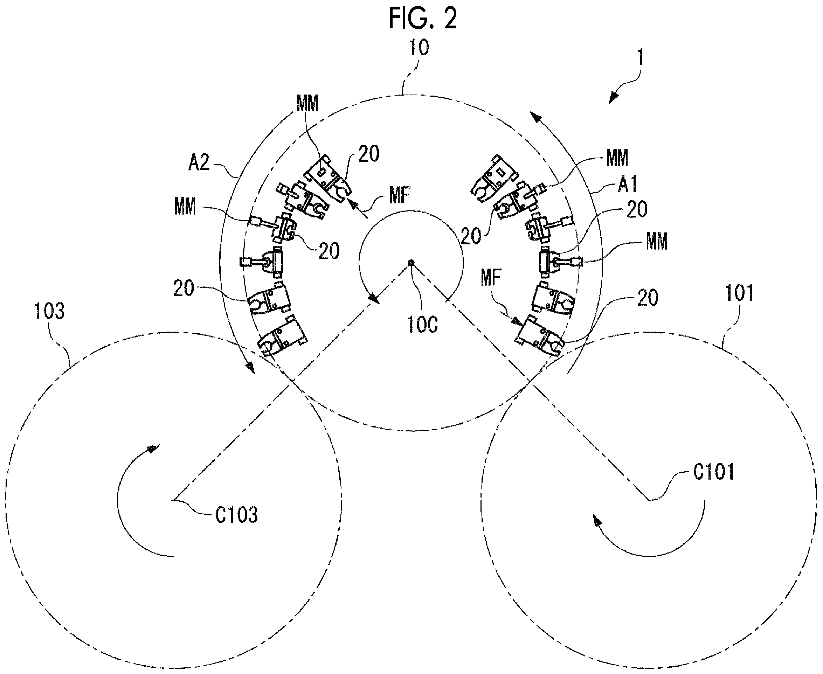

### [Overall Configuration of Conveying Device 1: FIGS. 1 and 2]

The conveying device 1 is provided between an input rotary body 101 provided on an upstream side and an output rotary body 103 provided on a downstream side. The conveying device 1 inverts the container twice while conveying the container along an arc-shaped path until the container received from the input rotary body 101 that rotates is delivered to the output rotary body 103 that rotates. The container received by the conveying device 1 from the input rotary body 101 is upright. In a case where the conveying device 1 forms a rotary rinser, the container is subjected to treatment such as washing and drying in a process of performing the inversion twice. The input rotary body 101 and the output rotary body 103 are referred to as star wheels, and although not illustrated, a plurality of grippers for gripping containers are provided around each of the input rotary body 101 and the output rotary body 103, and rotate in synchronization with the conveying device 1.

The conveying device 1 includes a rotary body 10, a plurality of grippers 20 which are supported by the rotary body 10 and each of which is configured to invert a posture while gripping the container, and the inversion mechanism 30 that inverts the posture of the gripper 20. The gripper 20 moves along an arc-shaped trajectory as the rotary body 10 rotates.

### [Rotary Body 10: FIGS. 1 and 2]

The rotary body 10 is a circular member that can be rotated around a rotation axis 10C by a driving source (not illustrated).

The rotary body 10 is provided with the plurality of grippers 20 on an outer peripheral side and rotates together with the plurality of grippers 20. In FIGS. 1 and 2, the gripper 20 related to the inversion is described, but the description of the other gripper 20 is omitted. Regions at which the grippers 20 are described are inversion regions A1 and A2. In the inversion region A1, the container is inverted from an upright posture to an inverted posture and is conveyed to the inversion region A2 while remaining in the inverted posture. In the inversion region A2, the container is inverted from the inverted posture to the upright posture, and thereafter, the container is delivered to the output rotary body 103. The inversion mechanism 30, which will be described below, is provided corresponding to each of the inversion regions A1 and A2 provided around the rotary body 10.

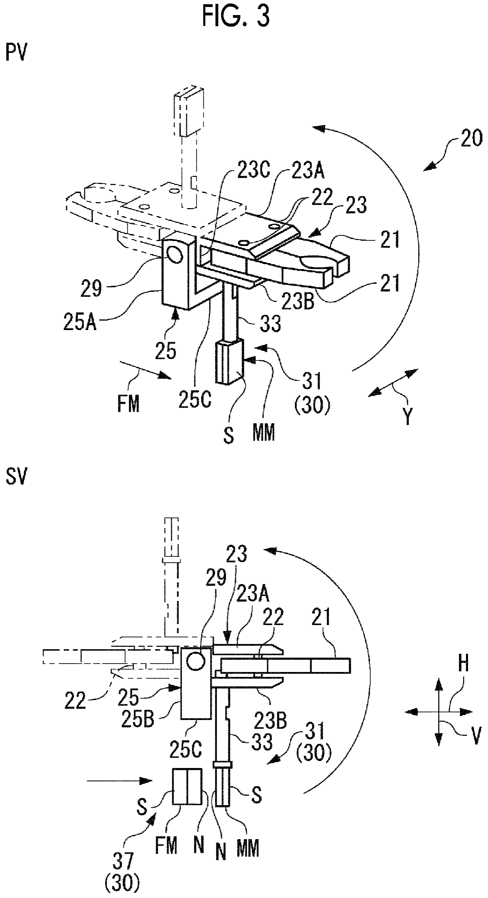

### [Gripper 20: See FIG. 3]

Next, the gripper 20 will be described with reference to FIG. 3. In addition, in FIG. 3, a posture before inversion is an upright posture, the posture after inversion is an inverted posture, the upright posture is indicated by a solid line, and the inverted posture is indicated by a virtual line. In addition, in FIG. 3, arrows indicate directions in which the gripper 20 is inverted.

The gripper 20 includes a pair of clamp pieces 21 and 21, a first holder 23 that supports each of the clamp pieces 21 and 21 to be swingable, and a second holder 25 that supports the first holder 23 to be swingable. In order to prevent the gripper 20 from being magnetized by being placed in a range of a magnetic field in which a magnetic force of the movable-side magnet MM and the fixed-side magnet FM acts, it is preferable that each component such as the clamp pieces 21 and 21 is made of a non-magnetic metallic material. In particular, it is preferable to use austenitic stainless steel having both a corrosion resistance and a strength, for example, JIS SUS304, SUS316, or the like.

The swing means that an operation of rotating in one direction and an operation of rotating in the other direction are alternately repeated.

The clamp pieces 21 and 21 are supported to be swingable with respect to the first holder 23 via swing shafts 22 and 22, respectively. The clamp pieces 21 and 21 reciprocate, that is, swing between a closed state in which the container is gripped and an open state in which the grip on the container is released. A mechanism for swinging the clamp pieces 21 and 21 is omitted here, but a known mechanism using a cam can be adopted, for example.

The first holder 23 has a U shape or a C shape in a side view, and includes support bodies 23A and 23B disposed to face each other in parallel, and a coupling body 23C that couples one ends of the support bodies 23A and 23B.

Except for the coupling body 23C, the support bodies 23A and 23B have a gap therebetween, and are open to an outside. Some portions of the clamp pieces 21 and 21 are disposed between the support bodies 23A and 23B, and the other portions are exposed from the opened other ends (tips) of the support bodies 23A and 23B to the outside. An inversion shaft 29 is provided to penetrate the coupling body 23C, and both ends of the inversion shaft 29 are supported by the second holder 25.

The second holder 25 has a U shape or a C shape in a side view, and includes support bodies 25A and 25B disposed to face each other in parallel, and a coupling body 25C that couples one ends of the support bodies 25A and 25B.

Except for the coupling body 25C, the support bodies 25A and 25B have a gap therebetween, and are open to the outside. In the first holder 23, the coupling body 23C is disposed between the support bodies 25A and 25B, and the other portion is exposed from the opened support bodies 25A and 25B to the outside. The inversion shaft 29 penetrating the coupling body 23C disposed on an inside in the width direction Y is supported at both ends by the support bodies 25A and 25B. Accordingly, the first holder 23 and the clamp pieces 21 and 21 supported by the first holder 23 are swingable with respect to the second holder 25. As illustrated in FIG. 3, the first holder 23 and the clamp pieces 21 and 21 rotate by 180 degrees, that is, are inverted, around the inversion shaft 29.

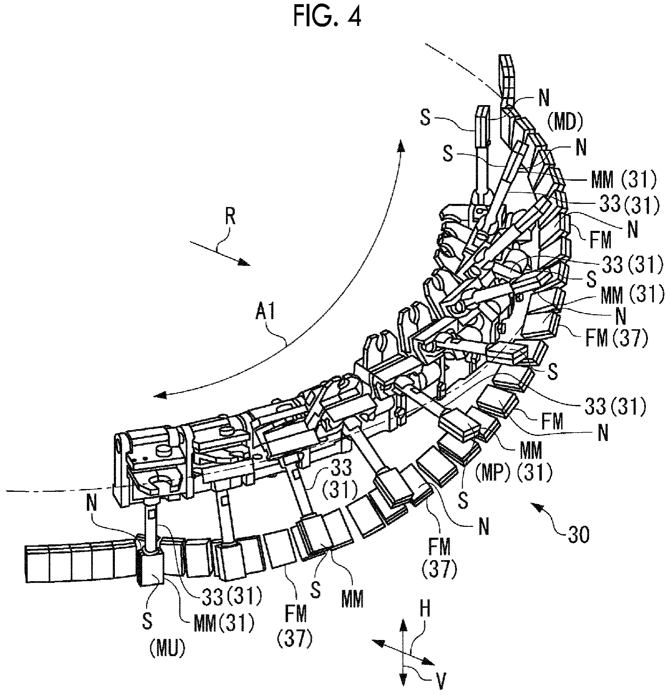

### [Inversion Mechanism 30: See FIGS. 3 and 4]

Next, the inversion mechanism 30 will be described with reference to FIGS. 3 and 4.

The inversion mechanism 30 includes a movable-side element 31 that is provided in the gripper 20 and rotates and moves together with the rotary body 10, and a fixed-side element 37 that is provided in each of the inversion region A1 and the inversion region A2. A position of the fixed-side element 37 is fixed in the inversion region A1 (A2). The inversion mechanism 30 inverts the gripper 20 by applying a magnetic repulsive force between the movable-side element 31 and the fixed-side element 37 to the gripper 20.

### [Movable-side Element 31: See FIG. 3]

The movable-side element 31 is provided in each of the plurality of grippers 20. The movable-side element 31 includes the movable-side magnet MM that generates a magnetic repulsive force with the fixed-side magnet FM of the fixed-side element 37, and the inversion arm 33 that supports the movable-side magnet MM. The movable-side magnet MM is fixed to the inversion arm 33 not to be able to rotate with respect to the inversion arm 33.

The movable-side magnet MM is configured with, for example, a rectangular permanent magnet, and one surface side of the front and back sides forms an N pole and the other surface side forms an S pole. That is, the permanent magnet has anisotropy in a plate thickness direction. The arrangement of the N pole and the S pole may be reversed on the front and back sides of the movable-side magnet MM. Here, as illustrated in SV of FIG. 3, the magnetic poles of the surfaces of the movable-side magnet MM and the fixed-side magnet FM, which face each other are both N poles or both S poles. A material of the movable-side magnet MM, such as an appropriate permanent magnet, will be described below.

As an example, the inversion arm 33 is fixed to the support body 23B of the first holder 23 in the gripper 20 to be orthogonal to the support body 23B. When the first holder 23 is in an upright state, the inversion arm 33 faces downward in a vertical direction V. When the first holder 23 is in an inverted state, the inversion arm 33 faces upward in the vertical direction V. In a free state in which the magnetic force from the fixed-side magnet FM does not act on the movable-side magnet MM, the inversion arm 33 faces downward in the vertical direction V, and the gripper 20 is in an upright state. The movable-side magnet MM is provided on a tip side of the inversion arm 33, and faces an inside of the rotary body 10, that is, the rotation axis 10C, when the first holder 23 is in an upright state.

When a magnetic repulsive force is generated between the fixed-side magnet FM and the movable-side magnet MM of the fixed-side element 37, the magnetic repulsive force acts on the gripper 20 via the inversion arm 33. That is, the magnetic repulsive force in the present disclosure acts on the gripper 20 indirectly as an external force via the inversion arm 33. Since the first holder 23 to which the inversion arm 33 is fixed is swingable by the inversion shaft 29, an angular moment is generated in the inversion arm 33 and the first holder 23, and the gripper 20 is inverted. In addition, when the same magnetic force is applied, the greater the distance from the movable-side magnet MM, which generates a magnetic repulsive force, to the inversion shaft 29, the greater the angular moment.

### [Operation of Movable-side Element 31 and Fixed-side Element 37: See FIG. 4]

The fixed-side element 37 is provided in each of the inversion region A1 and the inversion region A2.

The fixed-side element 37 includes the plurality of fixed-side magnets FM. The plurality of fixed-side magnets FM are arranged in a row in the inversion region A1 (A2) along a container conveying direction by the rotary body 10 and the gripper 20. Meanwhile, the plurality of fixed-side magnets FM are not arranged on the same plane, but are arranged along a three-dimensional trajectory corresponding to a trajectory on which the movable-side magnets MM mounted on the inversion arm 33 are to move in a process of inversion of the gripper 20. When the plurality of fixed-side magnets FM are placed on a base of which a surface is continuously inclined (not illustrated), the surface of the fixed-side magnets FM is inclined with respect to a horizontal direction H as illustrated in FIG. 4. Therefore, the plurality of fixed-side magnets FM are not parallel to the movable-side magnets MM. Meanwhile, a surface shape of the base on which the fixed-side magnet FM is placed can also be made parallel to the movable-side magnet MM that moves.

In the most upstream (MU) in the inversion region A1 (A2), as an example, the movable-side magnet MM has the N pole facing the inside in a radial direction R and the S pole facing the outside in the radial direction R. At this time, the gripper 20 is in an upright posture, the inversion arm 33 faces downward in the vertical direction V, and a magnetic pole surface of the movable-side magnet MM is parallel to the vertical direction V. The movable-side magnet MM moves such that an inclination with respect to the vertical direction V is increased and a position in the vertical direction V is increased from the most upstream (MU) toward the most downstream (MD). In this example, at the intermediate point (MP) between the most upstream (MU) and the most downstream (MD), the magnetic pole surface is orthogonal to the vertical direction V, that is, parallel to the horizontal direction H. After passing the intermediate point (MP), the movable-side magnet MM moves toward the most downstream (MD) while increasing the inclination with respect to the horizontal direction H and while increasing the position in the vertical direction V. In the most downstream (MD) of the inversion region A1, the S pole of the movable-side magnet MM faces the inside in the radial direction R, and the N pole faces the outside in the radial direction R. At this time, the gripper 20 is in an inverted posture, and the inversion arm 33 faces upward in the vertical direction V.

The plurality of fixed-side magnets FM are arranged as follows to realize the movement and the operation of the movable-side magnets MM as described above.

In the most upstream (MU) of the inversion region A1, the fixed-side magnet FM has a magnetic pole surface forming the N pole and the S pole, which is parallel to the vertical direction V, and the N pole faces the inside in the radial direction R. The fixed-side magnets FM are disposed such that an inclination with respect to the vertical direction V is increased and a position in the vertical direction V is increased from the most upstream (MU) side toward the most downstream (MD) side. In this example, at the intermediate point (MP) between the most upstream (MU) and the most downstream (MD), the magnetic pole surface of the fixed-side magnet FM is also orthogonal to the vertical direction V, that is, parallel to the horizontal direction H. After the intermediate point (MP), the fixed-side magnet FM is disposed toward the most downstream (MD) while increasing the inclination with respect to the horizontal direction H and while increasing the position in the vertical direction V. In the most downstream (MD) in the inversion region A1, the S pole of the fixed-side magnet FM faces the outside in the radial direction R, and the N pole faces the inside in the radial direction R.

From the most upstream (MU) to the most downstream (MD), the movable-side magnet MM and the fixed-side magnet FM receive a magnetic repulsive force from each other, and the movable-side magnet MM moves at a predetermined interval from the fixed-side magnet FM. That is, while the movable-side magnet MM and the fixed-side magnet FM maintain a non-contact state, the gripper 20 is inverted from an upright posture to an inverted posture. A posture of the gripped container is also inverted from an upright posture to an inverted posture as the gripper 20 is inverted.

FIG. 4 illustrates the arrangement of the fixed-side magnets FM and the operation of the movable-side magnets MM in the inversion region A1. In the same manner, in the inversion region A2, the movable-side magnets MM move at a predetermined interval from the fixed-side magnets FM, and the gripper 20 is inverted from the inverted posture to the upright posture while the movable-side magnets MM and the fixed-side magnets FM maintain a non-contact state. Regarding maintenance of the posture of the gripper 20 in the inverted state, which needs to move while maintaining the posture between the inversion region A1 and the inversion region A2, a description will be given below.

### [Effects]

According to the conveying device 1 described above, the following effects are obtained. The following effects are based on the fact that the gripper 20 can be inverted from the inverted posture to the upright posture while the movable-side magnet MM and the fixed-side magnet FM, which are elements of the inversion mechanism 30, maintain a non-contact state.

### <Suppression of Wear Powder Generation>

A magnetic force, particularly a magnetic repulsive force, between the movable-side magnet MM and the fixed-side magnet FM is used to invert the container gripped by the gripper 20. That is, since the inversion mechanism 30 of the conveying device 1 can realize the inversion without mechanical contact such as sliding, it is possible to suppress wear and the generation of wear powder generated between the guide rail and the slider in the related art.

### <Possibility of Shortening Inversion Region>

In the inversion mechanism in the related art in which the slider and the guide rail slide and mechanically contact each other, there is a concern that a frictional force between the slider and the guide rail is increased, and thus scuffing, sticking, or the like occurs to hinder the movement of the slider. Therefore, in the inversion mechanism in the related art, it is necessary to suppress an inclination of the guide rail with respect to the vertical direction to such an extent that scuffing, sticking, or the like does not occur, and in this case, a region (inversion region) required for the inversion becomes long. An upward inclination of the guide rail is an upward inclination of a trajectory along which the slider moves along the guide rail.

In contrast to the above, according to the inversion mechanism 30 of the present embodiment, the inversion can be realized in a non-contact manner. Therefore, it is not necessary to consider scuffing, sticking, or the like. Therefore, according to the inversion mechanism 30, an upward inclination of a trajectory along which the movable-side magnet MM moves can be increased, so that an inversion region can be reduced.

When the inversion region can be reduced, the region in which other processes other than the inversion region are performed can be lengthened, so that the other processes can be easily realized. Alternatively, when the inversion region can be reduced, a diameter of the rotary body constituting the conveying device can be reduced, so that a space occupied by the conveying device 1 can be reduced.

Although the embodiments of the present disclosure are described above, it is possible to select and adopt the configurations described in the embodiments or to appropriately change the configurations to other configurations.

### [Magnetic Repulsion and Magnetic Attraction]

In the embodiment described above, the fixed-side magnet FM and the movable-side magnet MM have the same magnetic poles on the surfaces facing each other, and the gripper 20 is inverted by using a property of repelling each other magnetically. Meanwhile, in the present disclosure, the gripper 20 can also be inverted by using a property of attracting each other magnetically. In a case of using the magnetic attractive force, two aspects are included.

In a first aspect, both a fixed side and a movable side are permanent magnets, and the fixed-side magnet FM and the movable-side magnet MM have different magnetic poles on surfaces facing each other. In a second aspect, one of the fixed side and the movable side consists of a magnet, and the other consists of a soft magnetic body. For example, the magnetic body provided in the gripper 20 on the movable side with respect to the fixed-side magnet FM is a soft magnetic body that is attracted to the magnet. A typical example of the soft magnetic body is a metal of any one of iron group elements (Fe, Ni, and Co) or an alloy of a plurality of types thereof. In the present disclosure, when simply referring to a magnet, it has a concept including both a permanent magnet and an electromagnet.

In addition, when the magnetic attractive force is used, it is necessary to pay attention such that the fixed-side magnet FM and the movable-side magnet MM do not directly contact each other. This is because, particularly in a case of a sintered magnet, there is a concern that chipping, cracking, or the like may occur when the sintered magnet comes into contact with the metal. By adjusting the magnetic attractive force, the fixed-side magnet FM and the movable-side magnet MM can be prevented from coming into direct contact with each other. In addition, one or both of the fixed-side magnet FM and the movable-side magnet MM may be accommodated and surrounded by a casing consisting of a highly flexible material, so that chipping, cracking, or the like may be prevented.

### [Type of Permanent Magnet]

A material of the permanent magnet used in the present disclosure is not limited, and is selected from known permanent magnets such as ferrite permanent magnets and rare earth permanent magnets.

In a case where a strong magnetic force is required for the fixed-side magnet FM and the movable-side magnet MM, it is preferable to use a rare earth permanent magnet. As the rare earth permanent magnet, a Nd-Fe-B-based permanent magnet in which Nd, Fe, and B are main components and a Sm-Co-based permanent magnet in which Sm and Co are main components are known as typical examples, but any of them can be used in the present disclosure. When the Nd-Fe-B-based permanent magnet and the Sm-Co-based permanent magnet are compared, the Nd-Fe-B-based permanent magnet has higher magnetic characteristics than the Sm-Co-based permanent magnets. Meanwhile, the Nd-Fe-B-based permanent magnet has a lower corrosion resistance than Sm-Co-based permanent magnets. This is because the Nd-Fe-B-based permanent magnet contains a large amount of Fe, which is less corrosion resistant than Co. Therefore, in a case where the Nd-Fe-B-based permanent magnet is used, it is preferable that plating or other surface treatment is performed. In a case of plating, Ni plating is appropriately used. The Nd-Fe-B-based permanent magnet has a Curie temperature of approximately 300°C, which is lower than that of the Sm-Co-based permanent magnet. Meanwhile, a decrease in magnetic force is hardly a problem in an environment of a filling system including a rotary rinser.

A process for producing the permanent magnet is also optional, and a resin-bonded magnet (bond magnet) obtained by mixing magnet powder with a binder such as plastic or rubber and solidifying and molding the mixture can be used instead of the sintered magnet obtained by sintering the magnet powder. Some examples of the bonded magnet are described below.

Compression-molded magnet: a permanent magnet obtained by press-molding a magnetic raw material obtained by mixing magnetic powder and a thermosetting resin, for example, an epoxy resin, and then thermally curing the molded product.

Injection molded magnet: a permanent magnet obtained by injection molding a magnet raw material obtained by mixing magnet powder and a thermoplastic resin using an injection molding machine and a mold.

Extruded magnet: a permanent magnet obtained by extruding a magnet raw material obtained by mixing magnet powder and a thermoplastic resin.

The plurality of fixed-side magnets FM provided in the inversion region A1 and the inversion region A2 may be configured with a plurality of permanent magnets having the same magnetic force. In this case, a magnetic repulsive force between the movable-side magnet MM and any of the plurality of fixed-side magnets FM can be made the same. In addition, the plurality of fixed-side magnets FM provided in the inversion region A1 may be configured with permanent magnets having different magnetic forces. In this case, a repulsive force between the movable-side magnet MM and the fixed-side magnet FM can be changed with respect to the plurality of fixed-side magnets FM. In this case, all of the plurality of permanent magnets may have different magnetic forces, or as an example, the plurality of permanent magnets may be divided into several groups, for example, three groups, and the magnetic force may be changed for each group.

### [Use of Electromagnet for Fixed-Side Magnet FM and Movable-Side Magnet MM]

In the embodiment described above, an example in which permanent magnets are used as the fixed-side magnet FM and the movable-side magnet MM is described. Meanwhile, in the present embodiment, an electromagnet can be used in place of the permanent magnets in one or both of the fixed-side magnet FM and the movable-side magnet MM. In this case, it is preferable to use the electromagnet for the fixed-side magnet FM. Since the electromagnet has an auxiliary element such as an electric wire that supplies an electric current, it is preferable to apply the electromagnet to the fixed-side magnet FM such that the configuration of the conveying device 1 can be simplified.

A strength of the magnetic force of the magnet is represented by magnetic flux density (T). A magnetic flux density of the electromagnet is proportional to the number of times of winding of a coil and a current value supplied to the coil. Therefore, according to the electromagnet, a magnetic force stronger than that of the permanent magnet can be generated. In addition, while the magnetic force of the permanent magnet is constant, the strength of the magnetic force can be changed by changing the current value to be supplied in the case of the electromagnet.

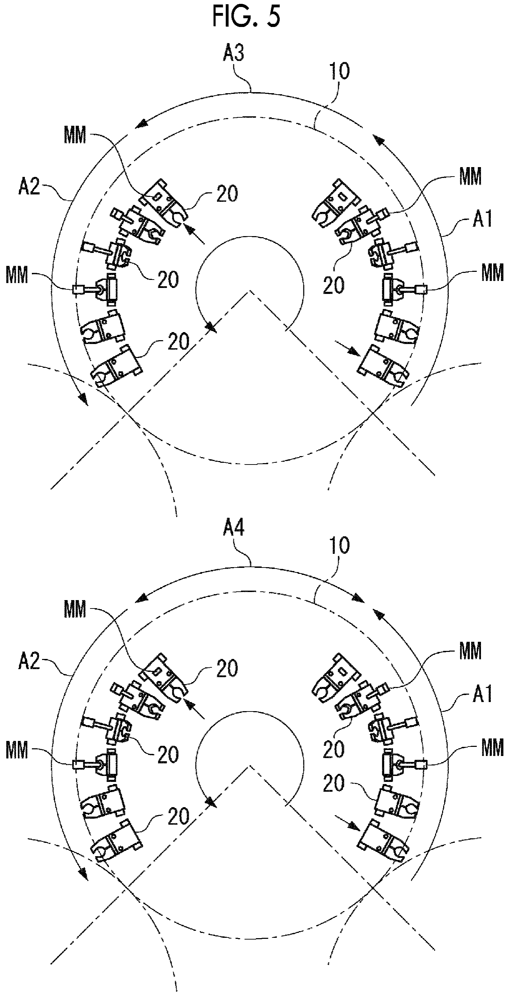

### [Fixed-side Magnet FM (Inversion Region A1, A2) Arrangement Example: See FIG. 5]

The inverted gripper 20 needs to move while maintaining its posture between the inversion region A1 and the inversion region A2 in the embodiment described above. The maintenance of this posture can be performed by using the magnetic force from the magnet or using means other than the magnetic force. A centrifugal force is generated in the movable-side element 31 (the inversion arm 33 and the movable-side magnet MM) provided in the gripper 20 toward the outside in the radial direction as the rotary body 10 rotates. The movable-side element 31 receiving the centrifugal force is inclined outward in the radial direction. Therefore, it is necessary to move the gripper 20 to the inversion region A2 while stopping the inclination and maintaining the upright state.

An example using the magnetic force is illustrated in FIG. 5 (upper part). In this example, a posture maintenance region A3 in which the plurality of fixed-side magnets FM are arranged is provided between the inversion region A1 and the inversion region A2 in which the plurality of fixed-side magnets FM are arranged. The fixed-side magnet FM in the posture maintenance region A3 has the same posture as the fixed-side magnet FM in the most downstream (MD) of the inversion region A1, that is, along the vertical direction V. While the gripper 20 passes through the posture maintenance region A3, a magnetic repulsive force is generated between the movable-side magnet MM supported by the inversion arm 33 of the gripper 20 in an inverted posture and the fixed-side magnet FM in the posture maintenance region A3. Therefore, the inverted posture of the gripper 20 is maintained. The fixed-side magnet FM arranged in the posture maintenance region A3 may be any of a permanent magnet and an electromagnet.

An example of using means other than the magnetic force is illustrated in FIG. 5 (lower part). In this example, between the inversion region A1 and the inversion region A2 both in which the plurality of fixed-side magnets FM are arranged, a posture maintenance region A4 is provided in which a posture of the gripper 20 provided with the movable-side element 31 is maintained without applying a magnetic force. In the posture maintenance region A3, even when a centrifugal force loaded on the movable-side element 31 (the inversion arm 33 and the movable-side magnet MM) is generated, a position of a center of gravity of the gripper 20 including the movable-side element 31 is adjusted not to be inclined outward in the radial direction. That is, the center of gravity of each of the grippers 20 is displaced to the inside in the radial direction R. For example, the inversion arm 33 may be inclined inward in the radial direction R rather than being parallel to the vertical direction V.

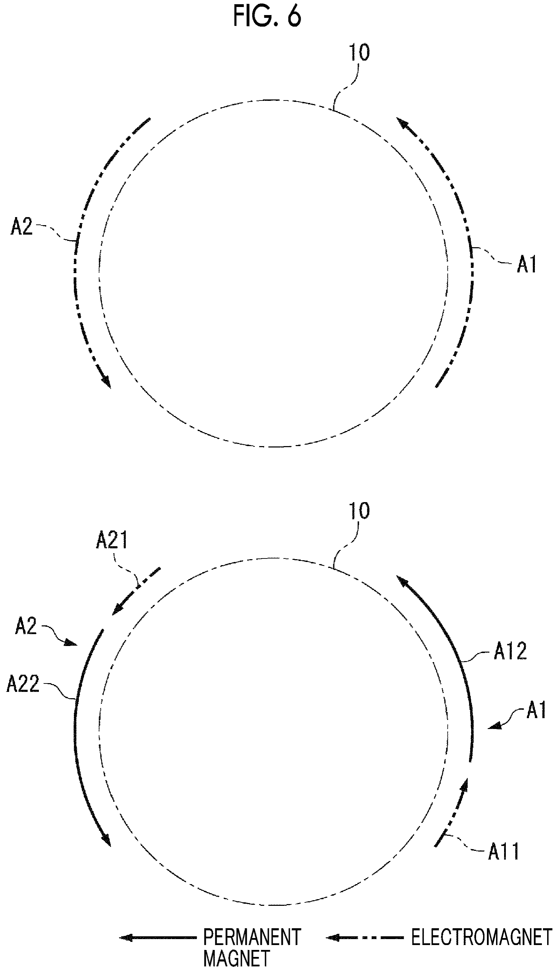

### [Use of Electromagnet: FIG. 6]

The case where an electromagnet can be used for one or both of the movable-side magnet MM and the fixed-side magnet FM is described. Here, an example of an aspect in which an electromagnet is used will be described.

The upper view of FIG. 6 illustrates an example in which the fixed-side magnet FM consisting of a plurality of electromagnets is arranged in the entire regions of each of the inversion region A1 and the inversion region A2.

The lower view of FIG. 6 illustrates an example in which a permanent magnet and an electromagnet are combined. The inversion region A1 is configured with an inversion region A11 and an inversion region A12, and the inversion region A2 is configured with an inversion region A21 and an inversion region A22. In the inversion region A1 and the inversion region A2, the inversion region A11 and the inversion region A21 including a portion at which the inversion operation starts consists of single or a plurality of electromagnets. In the inversion region A1 and the inversion region A2, the inversion region A12 and the inversion region A22 that follow the inversion region A11 and the inversion region A21, respectively, consist of a plurality of permanent magnets.

In a series of operations of inversion from an upright posture to an inverted posture and a series of operations of inversion from the inverted posture to the upright posture, a greater magnetic repulsive force is required at the portion at which the inversion operation starts than thereafter. Therefore, in the example described above, the fixed-side magnets FM consisting of an electromagnet from which a large magnetic force is easily obtained are arranged in the inversion region A11 and the inversion region A21. Meanwhile, this is merely a preferred embodiment of the present disclosure, and the use of a permanent magnet in the inversion region A11 and the inversion region A21, which is a portion at which the inversion operation starts, and the use of an electromagnet in the inversion region A21 and the inversion region A22 thereafter are allowed.

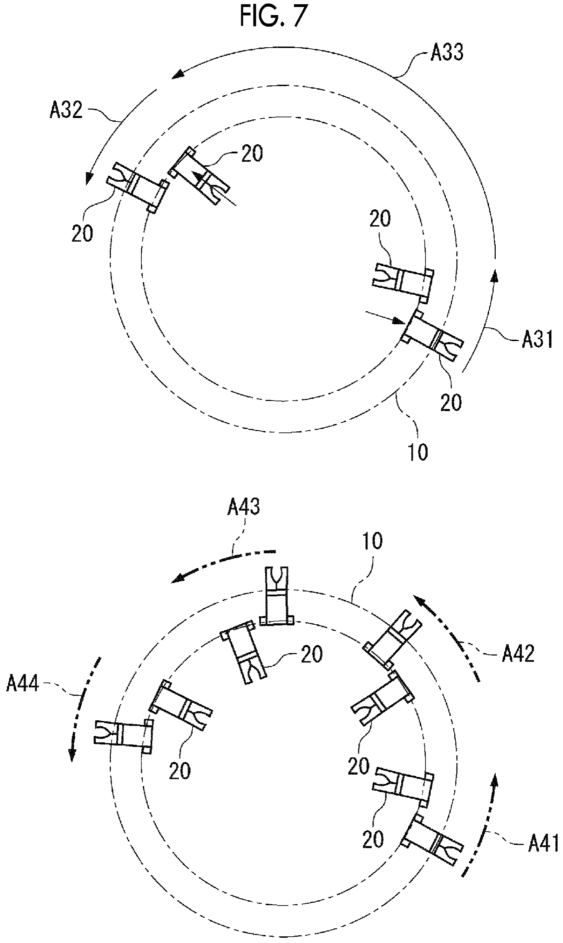

### [Inversion Aspect: See FIG. 7]

In the embodiment described above, each of the inversion region A1 and the inversion region A2 is provided with the plurality of the fixed-side magnets FM and the two inversion regions A1 and A2 are provided. Meanwhile, the present disclosure includes other aspects.

The upper part of FIG. 7 illustrates an example in which the gripper 20 is inverted by receiving a magnetic force from the single fixed-side magnet FM in both inversion region A31 and inversion region A32 as an exemplary aspect of the present disclosure. In order to invert the gripper 20 by a magnetic repulsive force between the single fixed-side magnet FM and the movable-side magnet MM, a strong magnetic force is required. Therefore, it is preferable to use an electromagnet for the fixed-side magnet FM or to use an Nd-Fe-B-based permanent magnet in a case of using a permanent magnet.

The lower part of FIG. 7 illustrates an example in which four inversion regions A41, A42, A43, and A44 are provided as an exemplary aspect of the present disclosure. That is, in the case of the conveying device of the present disclosure, the provided inversion region is not limited to two, and is selected from one or three or more. In each of the four inversion regions A41, A42, A43, and A44, inversion from an upright posture to an inverted posture, inversion from the inverted posture to the upright posture, inversion from the upright posture to the inverted posture, and inversion from the inverted posture to the upright posture are performed. In addition, the lower part following the upper part of FIG. 7 illustrates an example in which the gripper 20 is inverted by receiving a magnetic force from a single fixed-side magnet FM. Meanwhile, in the present disclosure, the gripper 20 may be inverted by receiving a magnetic force from the plurality of fixed-side magnets FM.

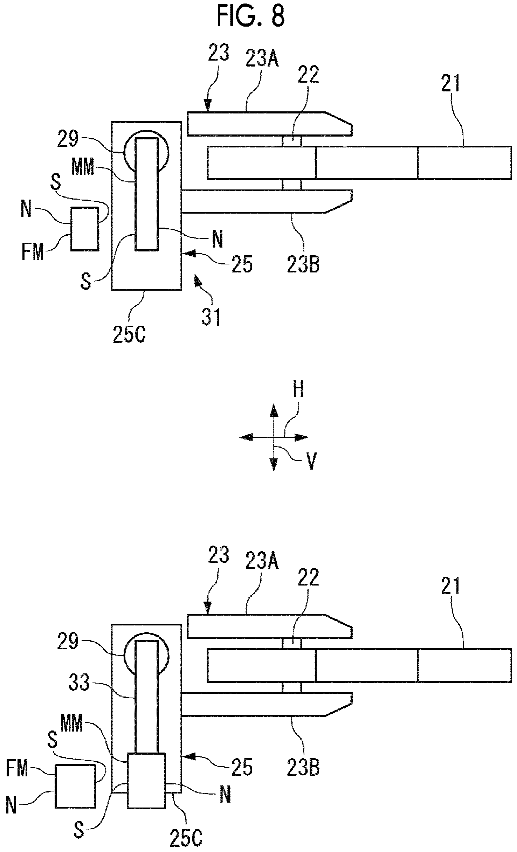

### [Mounting Aspect of Movable-Side Magnet MM: FIGS. 3 and 8]

In the embodiment described above, as illustrated in FIG. 3, the movable-side magnet MM is mounted on the inversion arm 33 provided perpendicular to the support body 23B of the gripper 20. Meanwhile, the present disclosure includes other mounting aspects of the movable-side magnet MM.

In a first aspect of the other mounting aspects, as illustrated in the upper part of FIG. 8, the movable-side magnet MM is fixed to the inversion shaft 29. The movable-side magnet MM is made of a permanent magnet having a rectangular cross-section, and when an external force based on a magnetic force is applied to the movable-side magnets MM in the horizontal direction H on a tip side opposite to the side fixed to the inversion shaft 29, an angular moment is generated in the movable-side magnets MM, and the movable-side magnets MM rotate counterclockwise in FIG. 8. The inversion shaft 29 rotates counterclockwise in FIG. 8 as the movable-side magnet MM rotates, so that the gripper 20 is inverted counterclockwise. In order to apply the external force, the fixed-side magnet FM is provided. One surface side of the movable-side magnet MM forms an S pole, the other surface side forms an N pole, and the surface side of the fixed-side magnet FM facing the movable-side magnet MM forms the S pole. Therefore, the magnetic repulsive force between the movable-side magnet MM and the fixed-side magnet FM becomes an external force that is a starting point of the generation of the angular moment.

The movable-side magnet MM may be magnetized such that a magnetic repulsive force is generated between the movable-side magnet MM and the fixed-side magnet FM, and the tip side may be an S pole and the rear end side may be an N pole.

In a second aspect of the other mounting aspects, as illustrated in the lower part of FIG. 8, the movable-side magnet MM is fixed to a tip of the inversion arm 33 fixed to the inversion shaft 29. The movable-side magnet MM consists of a rectangular parallelepiped-shaped permanent magnet. In the second aspect as well, the magnetic repulsive force between the movable-side magnet MM and the fixed-side magnet FM is an external force that is a starting point for the generation of the angular moment.

A common point between the embodiment and the two mounting aspects is that a moment for inverting the gripper 20 is generated by a magnetic force. That is, the inversion mechanism 30 inverts the gripper 20 by generating an angular moment around the inversion shaft 29 of the gripper 20.

### [Shapes of Movable-Side Magnet MM and Fixed-Side Magnet FM]

As long as a magnetic repulsive force or a magnetic attractive force is generated between the movable-side magnet MM and the fixed-side magnet FM, shapes of the movable-side magnet MM and the fixed-side magnet FM are not limited to the above rectangular cross-section parallelepiped shape. For example, a permanent magnet having an elliptical cross-section (including a circular shape) or a permanent magnet having a polygonal cross-section other than a rectangular shape, for example, a regular hexagonal shape can be adopted.

### [Appendices]

According to the present disclosure, a conveying device (1) below is specified. Specific Note 2 and subsequent specific notes can be applied to Specific Note 2 and all previous specific notes.

### <Specific Note 1>

A conveying device (1) for an article including:
a rotary body (10) that is rotatable by a driving source;
a plurality of grippers (20) each of which is configured to invert a posture while gripping the article, at a peripheral edge of the rotary body (10); and
an inversion mechanism (30) that inverts the posture of the gripper,
in which the inversion mechanism (30) inverts the posture of the gripper (20) by applying a magnetic repulsive force or a magnetic attractive force to the gripper (20).

### <Specific Note 2>

It is preferable that the inversion mechanism (30) includes an inversion shaft (29) that rotatably supports the gripper (20), and the posture of the gripper (20) is inverted by generating an angular moment around the inversion shaft (29) in the gripper (20) with the magnetic repulsive force or the magnetic attractive force.

### <Specific Note 3>

It is preferable that the inversion mechanism (30) includes a movable-side magnet (MM) provided in each of the grippers (20), and a single or a plurality of fixed-side magnets (FM) provided in an inversion region of the gripper (20), which is provided along a circumferential periphery of the rotary body (10), and the magnetic repulsive force or the magnetic attractive force is generated by the movable-side magnet (MM) and the fixed-side magnet (FM) facing each other in a non-contact manner as the gripper (20) moves.

### <Specific Note 4>

It is preferable that the inversion mechanism (30) includes an inversion arm (33) that is fixed to the gripper (20) at a predetermined angle with respect to the gripper (20), and the movable-side magnet (MM) that is fixed to the inversion arm (33).

### <Specific Note 5>

It is preferable that the inversion mechanism (30) includes the movable-side magnet (MM) that is fixed to the inversion shaft (29).

### <Specific Note 6>

It is preferable that one or both of the movable-side magnet (MM) and the fixed-side magnet (FM) consist of permanent magnets.

### <Specific Note 7>

It is preferable that one of the movable-side magnet (MM) and the fixed-side magnet (FM) consists of a permanent magnet, and the other of the movable-side magnet (MM) and the fixed-side magnet (FM) consists of an electromagnet. Reference Signs List

1: conveying device
10: rotary body
10C: rotation axis
20: gripper
21: clamp piece
22: swing shaft
23: first holder
23A, 23B: support body
23C: coupling body
25: second holder
25A, 25B: support body
25C: coupling body
29: inversion shaft
30: inversion mechanism
31: movable-side element
33: inversion arm
37: fixed-side element
101: input rotary body
103: output rotary body
A1, A2: inversion region
MM: movable-side magnet
FM: fixed-side magnet
V: vertical direction
H: horizontal direction
Y: width direction

## Claims

1. A conveying device for an article comprising:
a rotary body that is rotatable by a driving source;
a plurality of grippers which are supported by the rotary body and each of which is configured to invert a posture while gripping the article; and
an inversion mechanism that inverts the posture of the gripper,
wherein the inversion mechanism inverts the posture of the gripper by applying a magnetic repulsive force or a magnetic attractive force to the gripper.

2. The conveying device according to Claim 1,
wherein the inversion mechanism includes an inversion shaft that rotatably supports the gripper, and
the posture of the gripper is inverted by generating an angular moment around the inversion shaft in the gripper with the magnetic repulsive force or the magnetic attractive force.

3. The conveying device according to Claim 2,
wherein the inversion mechanism includes
a movable-side magnet provided in each of the grippers, and
a single or a plurality of fixed-side magnets provided in an inversion region of the gripper, which is provided along a circumferential periphery of the rotary body, and
the magnetic repulsive force or the magnetic attractive force is generated by the movable-side magnet and the fixed-side magnet facing each other in a non-contact manner as the gripper moves.

4. The conveying device according to Claim 3,
wherein the inversion mechanism includes
an inversion arm that is fixed to the gripper at a predetermined angle with respect to the gripper, and
the movable-side magnet that is fixed to the inversion arm.

5. The conveying device according to Claim 3,
wherein the inversion mechanism includes the movable-side magnet that is fixed to the inversion shaft.

6. The conveying device according to Claim 3,
wherein one or both of the movable-side magnet and the fixed-side magnet consist of permanent magnets.

7. The conveying device according to Claim 3,
wherein one of the movable-side magnet and the fixed-side magnet consists of a permanent magnet, and
the other of the movable-side magnet and the fixed-side magnet consists of an electromagnet.

8. The conveying device according to Claim 6,
wherein the plurality of fixed-side magnets consisting of permanent magnets, which are provided in the inversion region along the circumferential periphery of the rotary body, are disposed such that an inclination of the fixed-side magnet with respect to a vertical direction or a horizontal direction is increased or decreased from an upstream side toward a downstream side in a direction in which the article is conveyed.

9. The conveying device according to Claim 8,
wherein the fixed-side magnet is disposed to be parallel to the horizontal direction at an intermediate point between the upstream side and the downstream side in the direction in which the article is conveyed.

10. The conveying device according to Claim 3,
wherein in a case where the posture of the gripper is inverted by the magnetic repulsive force,
the fixed-side magnet and the movable-side magnet consisting of permanent magnets have the same magnetic poles on surfaces facing each other, and magnetically repel each other, and
in a case where the posture of the gripper is inverted by the magnetic attractive force,
the fixed-side magnet and the movable-side magnet consisting of permanent magnets have different magnetic poles on the surfaces facing each other, and magnetically attract each other.
